# EUROPEAN PATENT APPLICATION

(11) **EP 3 545 800 A1**
(43) Date of publication of application: **02.10.2019**
(21) Application number: 18758461.0
(22) Date of filing: 11.02.2018
(51) Int. Cl.: A47G 19/22, A47G 19/16

(54) **ROTARY TEA BOTTLE**

(30) Priority: 23.02.2017 CN 201720166244 U
(71) Applicant: Heng Fu Tea Culture Co., Ltd., Guangzhou, Guangdong 510623 (CN)
(72) Inventor: XU, Jiegen, Guangzhou, Guangdong 510623 (CN)
(74) Representative: Sun, Yiming
(86) International application number: PCT/CN2018/076221
(87) International publication number: WO 2018/153291

(57) **Abstract**

A rotary tea bottle, comprising a tea bottle, the tea bottle comprises a bottle body, a rotary assembly, a first filtration mesh, and a second filtration mesh; the bottle body comprises upper and lower containers; the first filtration mesh is fixed on the upper part of the upper container; the second filtration mesh is fixed on the rotary assembly; the rotary assembly comprises rotary upper and lower assemblies; the rotary upper assembly is connected to the upper container; the rotary upper assembly is rotationally fixed on the rotary lower assembly; the rotary lower assembly is connected to the lower container; the rotary upper and lower assemblies are each provided with a through hole, the through holes are correspondingly connected; the upper assembly is used to rotated, so that the through holes are connected or not connected, the rotary tea bottle is good for brewing tea.

## Description

### TECHNICAL FIELD

The application relates to a tea bottle, in particular to a rotary tea bottle which can separate the tea from the water.

### BACKGROUND

Tea bottles is a common tea-brewing utensil in life. At present, most tea bottles separat the tea from the water are one-piece vacuum bottle, that would make people feel very hot when drinking water, and would take too long. Only a few bodies of the split-type tea bottle can be divided into an upper container and a lower container, the tea leaves are placed in the lower container and then the poured hot water from the upper mouth of the bottle, and because the sealing between the upper container and the lower container is not tight, there are prone to serious water leakage problems. When opening the lid to pour hot water from the upper mouth of the bottle, or when closing the lid and turning the tea bottle upside down to thoroughly mix the tea leaves and hot water and generate heat exchange, often because the design of the passing hole between the upper container and the lower container is unreasonable, there is an air barrier in the bottle body, therefore the hot water cannot flow smoothly between the upper container and the lower container, and the tea mixing and heat exchange effect is not good. Generally, the time for brewing tea should not be too long, a better way to brew tea is to pour hot water in the container and cover the container with a lid for 3-5 minutes. It is also not advisable to brew tea with a vacuum bottle or a heat preservation area, the present one-piece or split-type tea bottles all use vacuum bottles or heat preservation area to brew tea, that the continued high temperatures will destroy the nutrients in the tea leaves.

### SUMMARY

In order to overcome the deficiencies of the conventional technology, the application provides a rotary tea bottle, the main purpose of which is to ensure the leakproofness between the upper container and the lower container of the split-type tea bottle; and another purpose of which is to solve the problem that the hot water cannot flow smoothly between the upper container and the lower container; and another purpose of which is to solve the problem that the continuous high temperature in the vacuum bottle or the heat preservation area when brewing tea will destroy the nutrients in the tea.

The purpose of the present application is achieved by the following technical solutions:
A rotary tea bottle, comprising a tea bottle having a lid at the upper end, the tea bottle comprises a bottle body, wherein the tea bottle further comprises a rotary assembly and a second filtration mesh, besides the bottle body comprises an upper container and a lower container; and the second filtration mesh is fixed to the rotary assembly, the rotary assembly comprises a rotary upper assembly and a rotary lower assembly; and the rotary upper assembly is fixedly connected to the upper container, the rotary upper assembly is rotationally fixed to the rotary lower assembly, the rotary lower assembly is fixedly connected to the lower container, the lower surface of the rotary upper assembly is abuts on the upper surface of the rotary lower assembly, and the certain roughness is maintained between the rotary upper assembly and the rotary lower assembly, the rotary upper assembly and the rotary lower assembly are each provided with at least one through hole, the through hole of the rotary upper assembly and the through hole of the rotary lower assembly are correspondingly connected; when the rotary upper assembly is rotated by an angle, the through hole of the rotary upper assembly is misalignment closed with the through hole of the rotary lower assembly.

Preferably, the rotary upper assembly comprises a rotary upper casing and a first rotary valve, besides the rotary lower rotary assembly comprises a second rotary valve and a rotary lower casing, and the second filtration mesh is fixed to the upper surface of the rotary upper casing, and the upper container is fixedly connected to the rotary upper casing, and the first rotary valve is fixed to the rotary upper casing, and the rotary lower casing is fixedly connected to the lower container, and the second rotary valve is fixed to the rotary lower casing, and the lower surface of the first rotary valve is abuts on the upper surface of the second rotary valve, and the certain roughness is maintained between the first rotary valve and the second rotary valves, the rotary upper casing and the rotary lower casing are each provided with a through hole, the first rotary valve and the second rotary valve are each provided with at least one water-passing hole, and the through hole and the water-passing hole communicate with each other can form a channel; the upper surface of the rotary lower casing is provided with at least one convex block, the lower surface of the rotary upper casing is provided with at least one sliding groove, and the convex block is cooperating with the sliding groove; when the rotary upper casing is rotated by an angle, the convex block is abuting on the sliding groove, the water-passing hole of the first rotary valve is misalignment closed with the second rotary valve.

Preferably, the rotary assembly further comprises a rotary shaft, the rotary upper casing is fixedly sleeved on the rotary shaft, the rotary shaft is provided with through holes, and the upper surface of the first rotary valve is fixed to one end of the rotary shaft.

Preferably, the number of the water-passing holes in the first rotary valve and the second rotary valve is two, the shape of the water-passing hole is a sector or a triangle.

Preferably, a water guiding portion is arranged beside the water-passing hole, between the water guiding portion and the horizontal plane forms an angle.

Preferably, the rotary assembly further comprises a sealing member, the sealing member is provided at the joint of the upper container and the rotary upper casing; the sealing member is disposed between the rotary shaft and the rotary upper casing; the sealing member is disposed between the rotary shaft and the rotary lower casing; the sealing member is disposed between the rotary shaft and the first rotary valve; the sealing member is disposed between the rotary upper casing and the rotary lower casing; the sealing member is disposed between the valve fixing seat and the second rotary valve.

Preferably, the surface roughness of the lower surface of the rotary upper assembly and the upper surface of the rotary lower assembly ranges from 0.01 µm to 0.06µm.

Preferably, the distance between the inner surface of the second filtration mesh and the upper surface of the rotary shaft is 5mm to 10mm.

Preferably, the angle of the sector is 70 to 90 degrees, and the sliding groove is a circular arc sliding groove, the angle corresponding to the central angle of the circular sliding groove is 70 to 90 degrees.

Preferably, the rotary assembly further comprises a valve fixing seat, the lower surface of the second rotary valve is fixed to the upper surface of the valve fixing seat, the rotary lower casing is fixed to the valve fixing seat, the first rotary valve and the second rotary valve are both located in the through hole of the rotary lower casing.

Preferably, the bottle wall of the upper container is a solid structure, and the bottle wall of the lower container is provided with a heat retaining cavity.

Preferably, the tea bottle further comprises a first filtration mesh, the first filtration mesh is fixed to the upper part of the upper container.

Compared with the conventional technology, the present application has the following beneficial effects:
(1) The present application provides a rotary tea bottle, which is divided into an upper container and a lower container by the rotary assembly, that can be used for storing tea leaves when the rotary assembly is closed, and that can be used for storing hot water or tea when the rotary assembly is closed; the lower surface of the rotary upper assembly abuts against the upper surface of the rotary lower assembly, that maintaining a certain roughness between the rotary upper assembly and the rotary lower assemble, thus it can ensure the leakproofness between the upper container and the lower container of the split-type tea bottle.
(2) The through hole in the rotary shaft of the present application locally concentrates the overflow area of the hot water, and forms a large pressure and pressure gradient inside, and when the tea bottle is placed upside down, it is beneficial for the hot water quickly enter the brewing area from the heat preservation area, and the hot water is quickly cooled in the brewing area; the design of the two sectorial water-passing holes can increase the flow area, and it is convenient to simultaneously open and close the two sectorial water-passing holes when rotating the rotary upper casing, so that the hot water can smoothly flow from the lower container to the upper container; the water guiding portion is provided with a certain slope to form a certain pressure gradient at the water outlet portion, further enabling the hot water to smoothly flow from the lower container to the upper container, and further solving the problem that the hot water cannot flow smoothly between the upper container and the lower container.
(3) In the present application, between the components in the rotary assembly, between the rotary assembly and the upper container, between the rotary assembly and the lower container are both connected by the sealing member, and the sealing member is used for sealing the gap between the components in the rotary assembly, the gap between the rotary assembly and the upper and lower containers to prevent water leakage; which is in order to solve the problem of sealing between the upper container and the lower container of the split-type tea bottle; the lower surface of the first rotary valve and the upper surface of the second rotary valve must maintain sufficiently smooth to lock moisture, and the surface roughness thereof can range from 0.01µm to 0.06µm, which can further solve the sealing problem between the upper container and the lower container.
(4) The distance between the inner surface of the second filtration mesh and the upper surface of the rotary shaft in the present application can be designed to be 5 mm to 10 mm, due to the barrier of the second filtration mesh and the large air pressure in the heat preservation area, it can be ensured that the hot water in the brewing area will not flow down into the heat preservation area when the rotary valve is still open.
(5) In the present application, the bottle wall of the upper container is a solid structure, and the bottle wall of the lower container is provided with a heat retaining cavity, so that ensure that the upper container not only is a brewing area but also be a rapid cooling area, and the lower container is a heat preservation area. Brewing the tea leaves in the upper container can solve the problem that the high temperature in the vacuum bottle or the heat preservation area will destroy the nutrients in the tea leaves on the one hand, on the other hand, when the user makes tea, it is unnecessary to take too long to drink hot water of suitable temperature, which can basically achieve the effect of instant brewing, the user does not need to take too long when making tea, and can drink hot water of suitable temperature, basically can achieve the effect of instantly drink after brewing tea.

The above description is only an overview of the technical solutions of the present application. In order to understand the technical means of the present application more clearly, and can be implemented in according to the contents of the description, the following is a detailed description of the embodiments of the present application with reference to the accompanying drawings rear. Specific embodiments of the present application are given in details by the following examples and the accompanying drawings.

### BRIEF DESCRIPTION OF THE DRAWINGS

The drawings are intended to provide a further understanding of the present application, and are intended to be a part of the present invention, and the illustrative embodiments of the present application and their description are used to explain the present application, and is not intended to limit the application. In the drawing:
Figure 1 is a schematic structural view of a rotary tea bottle in the following embodiments;
Figure 2 is a schematic view showing the internal structure of a rotary tea bottle in the following embodiments;
Figure 3 is a schematic view showing the internal structure of the rotary assembly in the following embodiments;
Figure 4 is a exploded view of the rotary assembly in the following embodiments;
Figure 5 is a schematic structural view of the first rotary valve in the following embodiments;
Figure 6 is a two-dimensional front view of the first rotary valve in the following embodiments;
Figure 7 is a cross-sectional view taken along line A-A in Figure 6;
Figure 8 is a two-dimensional top view of the first rotary valve in the following embodiments;
Figure 9 is a schematic structural view of the rotary lower casing in the following embodiments;
Figure 10 is a schematic structural view of the rotary upper casing in the following embodiments;

In the figure: tea bottle 1, lid 11, upper container 12, lower container 13, first filtration mesh 14, second filtration mesh 15, rotary assembly 16, rotary upper casing 161, rotary shaft 162, sealing member 163, first rotary valve 164, second rotary valve 165, rotary lower casing 166, valve fixing seat 167, water-passing hole 168, water guiding portion 169, convex block 170, and sliding groove 171.

### DESCRIPTION OF EMBODIMENTS

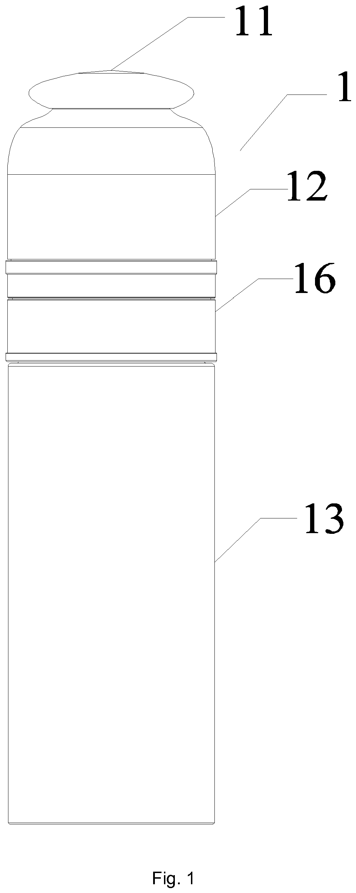

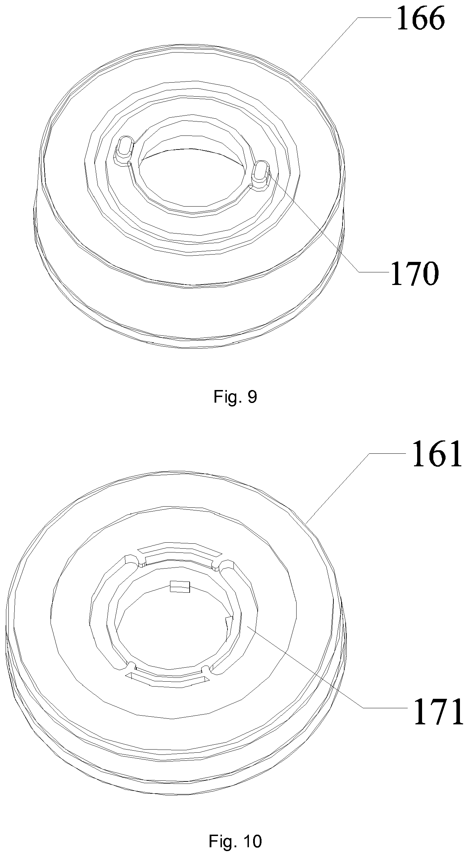

Hereinafter, the specific embodiments will be further described below with reference to FIG. 1-FIG.10.

The technical solutions in the embodiments of the present application will be clearly and completely described below in conjunction with the accompanying drawings in the embodiments of the present application. Obviously, the described embodiments are only a part of the embodiments of the present application, and not all of the embodiments. Based on the embodiments of the present application, all other embodiments obtained by those skilled in the art without creative efforts are within the scope of the present application.

It should be noted that when a component is referred to be "fixed to" another component, it can be directly on the other component or it can have a centered component. When a component is considered to "connect" another component, it can be directly connected to another component or it may have a centered component at the same time. When a component is considered to "set to" another component, it can be directly connected to another component or it may have a centered component at the same time. The terms "vertical," "horizontal," "left," "right," and the like, as used herein, are for illustrative purposes only.

Unless defined otherwise, all technical and scientific terms used herein have the same meaning as commonly understood by those skilled in the art to which this application belongs. The terminology used herein is for the purpose of describing particular embodiments, and is not intended to limit the application. The term "and/or" as used herein includes any and all combinations of one or more of the associated listed items.

As shown in Figures 1-2, the embodiments provide a rotary tea bottle comprising a tea bottle 1 having a lid 11 at its upper end, the tea bottle 1comprises a bottle body, wherein the tea bottle 1 further comprises a rotary assembly 16 and a second filtration mesh 15, the bottle body comprises an upper container 12 and a lower container 13; the second filtration mesh 15 is fixed to the rotary assembly 16, the rotary assembly 16 comprises a rotary upper assembly and a rotary lower assembly; the rotary upper assembly is fixedly connected to the upper container 12, the rotary upper assembly is rotationally fixed to the rotary lower assembly, the rotary lower assembly is fixedly connected to the lower container 13, the lower surface of the rotary upper assembly is abuts on the upper surface of the rotary lower assembly, and the certain roughness is maintained between the rotary upper assembly and the rotary lower assembly, the rotary upper assembly and the rotary lower assembly are each provided with at least one through hole, the through hole of the rotary upper assembly and the through hole of the rotary lower assembly are correspondingly connected; when the rotary upper assembly is rotated by an angle, the through hole of the rotary upper assembly is misalignment closed with the through hole of the rotary lower assembly. In order to further solve the sealing problem between the upper container 12 and the lower container 13, the surface in contact with the rotary upper assembly and the lower rotary assembly must be kept sufficiently smooth to lock moisture, wherein the surface roughness of the lower surface of the rotary upper assembly and the upper surface of the rotary lower assembly can be designed to be 0.01 µm to 0.06 µm.

It should be understood that in the embodiments, the said "fixed to" can be made detachable or non-removable fixed connection, when it is made detachable, it is convenient to process and assemble and replace damaged parts, when it is made non-removable, it can improve the sealing performance and prevent misoperation when rotary assembly is rotated; the fixing manner between the second filtration mesh 15 and the rotary upper casing 161 can be a snap connection; the method of using the embodiment is as follows: first, opening the lower container 13 by rotating the rotary assembly 16, loading the boiling water into the lower container 13, closing the rotary assembly 16 and fastening it to the lower container 13, the lower container 13 can be used for storing hot water in usual; opening the lid 11 and removing the first filtration mesh 14, and placing the tea leaves in the upper container 12, the upper container 12 can be used for storing the tea leaves in a usual; when the tea is needed, rotating the rotary upper assembly at a certain angle, to make the through hole of the rotary upper assembly and the through hole of the rotary lower assembly are correspondingly connected, and in the state where the lid 11 is closed, placing the tea bottle 1 upside down to sufficiently mix the tea leaves, after the hot water enters the upper container 12 through the rotary upper assembly 16, the hot water and the tea leaves are mixed to making tea, and completing the heat exchange of the hot and cold water; finally, reversely rotating the rotary upper assembly at a certain angle, such that the through hole of the rotary upper assembly is misalignment closed with the through hole of the rotary lower assembly, and then placing the tea bottle 1 upright, after the tea is finished, can open the lid 11 to drink. The second filtration mesh15 is used to isolate the tea leaves in the brewing area of the upper container to protect the rotary assembly 16, thereby preventing the accumulation of tea leaves or tea leaf particles in the rotary assembly 16 to form dirt or blockage, and also to prevent the tea leaves from entering the lower container 13, at this time, the higher temperature of the tea is stored in the lower container for drinking.

The design of the rotary assembly 16 contributes to divide the bottle body into the upper container 12 and the lower container 13, because the solid structure allows the hot water in the bottle to directly exchange heat with the outside, the upper container 12 is a brewing area of the tea water, and is also a rapid cooling area of the tea water, which is convenient for the user to drink tea without spending too much time to drink hot water at a suitable temperature, which can basically achieve the effect of instant brewing and enhance the user experience; the upper container 12 can also be used for storing the tea leaves; the lower container 13 is a heat preservation area, and the through hole of the rotary assembly 16 is closed, it can be used for storing hot water or tea with a relatively high temperature.

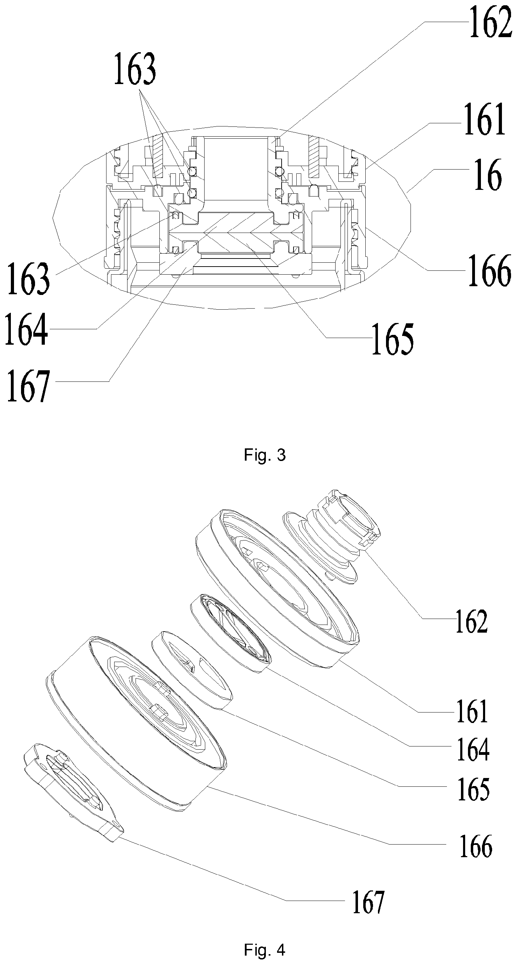

Further, as shown in FIG. 3 and FIG. 4, the rotary upper assembly comprises a rotary upper casing 161 and a first rotary valve 164, the rotary lower rotary assembly comprises a second rotary valve 165 and a rotary lower casing 166, the second filtration mesh is fixed to the upper surface of the rotary upper casing 161, the upper container 12 is fixedly connected to the rotary upper casing 161, the first rotary valve 164 is fixed to the rotary upper casing 161, the rotary lower casing 166 is fixedly connected to the lower container 13, the second rotary valve 165 is fixed to the rotary lower casing 166, the lower surface of the first rotary valve 164 is abuts on the upper surface of the second rotary valve 165, and the certain roughness is maintained between the first rotary valve 164 and the second rotary valves 165, the rotary upper casing 161 and the rotary lower casing 166 are each provided with a through hole, the first rotary valve 164 and the second rotary valve 165 are each provided with at least one water-passing hole 168, and the through hole and the water-passing hole 168 communicate with each other to form a channel; the upper surface of the rotary lower casing 166 is provided with at least one convex block 170, the lower surface of the rotary upper casing 161 is provided with at least one sliding groove, and the convex block 170 is cooperating with the sliding groove 171; when the rotary upper casing 161 is rotated by an angle, the convex block 170 is abuts on the sliding groove 171, the water-passing hole 168 of the first rotary valve 164 and the water-passing hole 168 of the second rotary valve 165 are misaligned with each other and closed. The material of the lower container 13, the first filtration mesh 14, and the second filtration mesh 15 are all 304 stainless steel; the upper container 12, the rotary upper casing 161, and the rotary lower casing 166 may each be made of polycarbonate; the first rotary valve 164 and the second rotary valve 165 can be made of a smooth material such as ceramic, because the ceramic material can achieve the roughness required to meet the sealing requirements between the valves.

The convex block 170 slides in the sliding groove 171, and when the convex block 170 moves to abut against one end of the sliding groove 171, the sliding groove 171 functions as a limit, and the water-passing hole of a rotary valve 164 is closed; when the rotary upper casing 161 is rotated by an angle in a reverse direction, when the convex block 170 is moving contact with the other end of the sliding groove 171, the water-passing hole of the first rotary valve 164 and the water-passing hole 168 of the second rotary valve 165 are correspondingly connected, and the water-passing hole of the first rotary valve 164 is being opened. The rotary upper assembly is divided into a rotary upper casing 161 and a first rotary valve 164, which makes the structure of each component simple, and facilitates processing and installation, and facilitates handling sealing problems.

Further, as shown in FIG. 3 and FIG. 4, the rotary assembly 16 further comprises a rotary shaft 162, and the first rotary valve 164 is fixed to the rotary upper casing 161 by the rotary shaft 162, the rotary upper casing 161 is fixedly sleeved on the rotary shaft 162, the rotary shaft 162 is provided with through holes, and the upper surface of the first rotary valve 164 is fixed to one end of the rotary shaft 162; the through hole in the rotary shaft 162 locally concentrates the overflow area of the hot water, and forms a large pressure gradient inside. When the tea bottle is placed upside down, the hot water is facilitated to quickly enter the brewing area from the heat preservation area, and the hot water is rapidly cooled in the brewing area, which can basically achieve the effect of instant brewing, and the tea mixing and heat exchange effect is good, which enhances the user experience. The rotary shaft 162 can also be designed as an inner tapered cylindrical structure, that is, the through hole in the rotary shaft 162 is conical, and the opening is downward, which can play a certain fluid guiding effect.

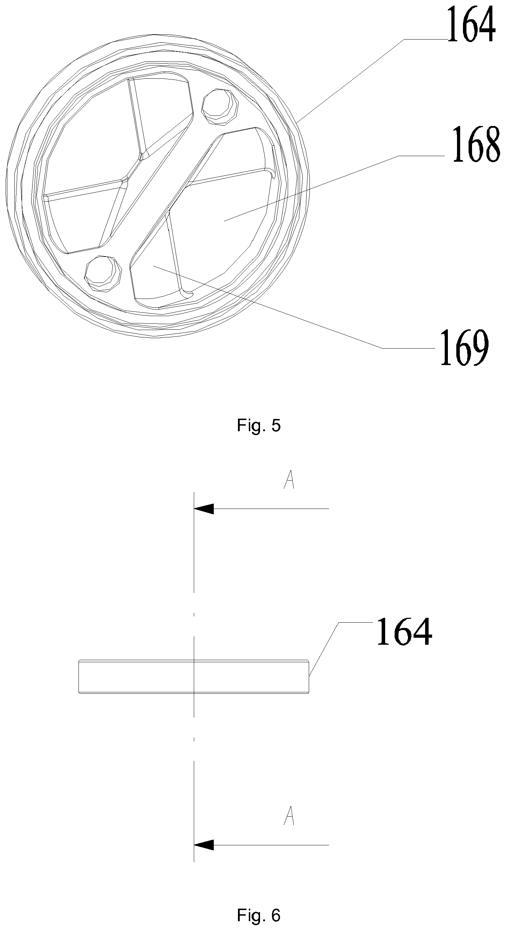

Further, as shown in FIGS. 6-8, the number of the water-passing holes 168 in the first rotary valve 164 and the second rotary valve 165 is two, the shape of the water-passing hole 168 is a sector, preferably, the two sectors are symmetric about their common center; the design of the two sectorial water-passing holes 168 can increase the flow area, facilitating simultaneous opening and closing of the two sectorial water-passing holes while rotating the upper casing 161, so that the hot water can smoothly flow from the lower container into the upper container, and the tea mixing and heat exchange effect is good; of course, the shape of the water-passing hole 168 can also be designed as a triangle or other shape with a sharp angle, which can be adjusted according to the actual flow of hot water.

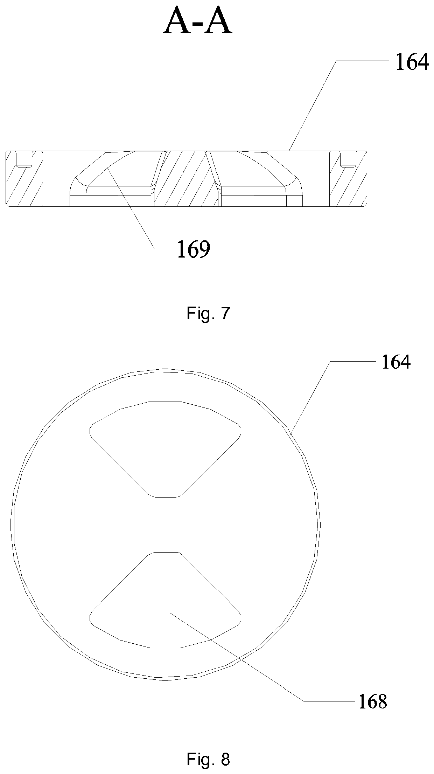

Further, as shown in FIG. 5 and FIG. 7, a water guiding portion 169 is disposed beside the water-passing hole, and the water guiding portion 169 forms an angle with the horizontal plane. The water guiding portion 169 is provided with a certain inclination to form a certain pressure gradient at the water outlet portion, and further enables the hot water to smoothly flow from the lower container into the upper container, and the tea mixing and heat exchange effect is good.

Further, as shown in FIG. 3, the rotary assembly 16 further comprises a sealing member 163, and the sealing member 163 is provided at the joint of the upper container 12 and the rotary upper casing 161, for sealing the gap between the upper container 12 and the rotary upper casing 161 to prevent water leakage; the circumferential surface of the rotary shaft is provided with a plurality of annular grooves, the annular grooves are used for placing the sealing member 163; the sealing member 163 is disposed between the rotary shaft 162 and the rotary upper casing 161 for sealing the gap between the rotary shaft 162 and the rotary upper casing 161 to prevent water leakage; and the sealing member 163 is disposed between the rotary shaft 162 and the rotary lower casing 166 for sealing the gap between the rotary shaft 162 and the rotary upper casing 166 to prevent water leakage; and the sealing member 163 is disposed between the rotary shaft 162 and the first rotary valve 164 for sealing the gap between the rotary shaft 162 and the first rotary valve 164 to prevent water leakage; and the sealing member 163 is disposed between the rotary upper casing 161 and the rotary lower casing 166 for sealing the gap between the rotary upper casing 161 and the rotary lower casing 166 to prevent water leakage; and the sealing member 163 is disposed between the valve fixing seat 167 and the second rotary valve 165 for sealing the gap between the valve fixing seat 167 and the second rotary valve 165 to prevent water leakage. Preferably, the sealing member 163 is silicon rubber sealing ring. In general, the sealing member 163 is designed to solve the problem of serious water leakage due to the untight sealing between the upper container and the lower container.

Further, in order to further solve the sealing problem between the upper container 12 and the lower container 13, the surface in contact between the first rotary valve 164 and the second rotary valve 165 must be kept smooth enough to lock the moisture. The surface roughness of the lower surface of the first rotary valves 164 and the upper surface of the second rotary valve 165 ranges from 0.01 µm to 0.06 µm.

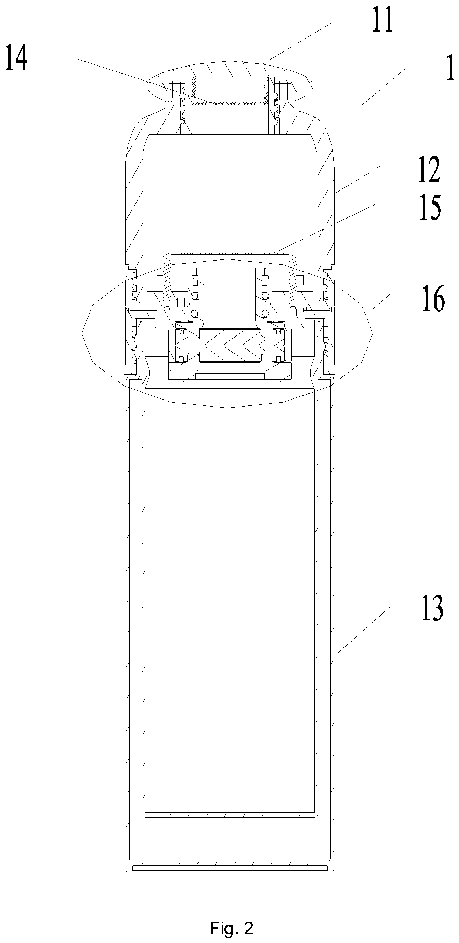

Further, as shown in FIG. 2, the distance between the inner surface of the second filtration mesh 15 and the upper surface of the rotary shaft 162 can be designed from 5 mm to 10 mm, so that due to the barrier of the second filtration mesh 15 and the large air pressure in the heat preservation area, it can be ensured that the hot water in the brewing area does not flow downward into the heat preservation area when the rotary valve is still in the open state.

Further, as shown in FIG. 8, the angle of the sector can be designed to be 70 to 90 degrees, the sliding groove is a circular arc groove, and the arc of the circular arc groove is 70 to 90 degrees; When the angle of the sector is 90 degrees, the flow area of the hot water through the rotary valve is the largest, which is more favorable for the hot water to smoothly flow from the lower container into the upper container.

Further, as shown in FIG. 3 and FIG. 4, the rotary assembly 16 further comprises a valve fixing seat 167, and the second rotary valve 165 is fixed to the rotary lower casing 166 by the valve fixing seat 167, the lower surface of the second rotary valve 165 is fixed to the upper surface of the valve fixing seat 167, the rotary lower casing 166 is fixed to the valve fixing seat 167, and the first rotary valve 164 and the second rotary valve 165 are both located in the through hole of the rotary lower casing 166. The design of the valve fixing seat 167 makes the connection of the second rotary valve 165 and the valve fixing 167 stable and reliable.

Further, the bottle wall of the upper container 12 is a solid structure, and the bottle wall of the lower container 13 is provided with a heat retaining cavity; it ensures that the upper container is a brewing area and is also a rapid cooling area, which can be used for storing tea leaves when the rotary assembly is closed; and the lower container is a heat preservation area, which can be used for storing hot water or tea when the rotary assembly is closed.

Further, the tea bottle further comprises a first filtration mesh 14, the first filtration mesh 14 fixed to an upper portion of the upper container 12; the first filtration mesh 14 is used for isolating tea leaves into a human mouth.

It can be understood that the number of the water-passing holes 168 in the first rotary valve 164 and the second rotary valve 165 can be one, two or more than two, it can be decided according to the performance requirements and the working conditions of the tea bottle. In addition, the material of the rotary valve can also be permanent magnet, which utilizes the characteristics of the permanent magnet that the different magnetic poles attract each other and the treatment of the smooth surface are beneficial to lock the moisture. At the same time, when the water passes through the rotary valve, it can absorb the metal substances in the water, which can play a role in purifying the water.

The embodiments provided a rotary tea bottle, which is divided into an upper container and a lower container by the rotary assembly, the upper container is a brewing area and is also a rapid cooling area, which can be used for storing tea leaves when the rotary assembly is closed; and the lower container is a heat preservation area, which can be used for storing hot water or tea when the rotary assembly is closed; brewing the tea leaves in the upper container can solve the problem that the high temperature in the vacuum bottle or the heat preservation area will destroy the nutrients in the tea leaves on the one hand, on the other hand, when the user makes tea, it is unnecessary to take too long to drink hot water of suitable temperature, which can basically achieve the effect of instant brewing.

The through hole in the rotary shaft of the embodiments locally concentrates the overflow area of the hot water, and forms a large pressure and pressure gradient inside, and when the tea bottle is placed upside down, it is beneficial for the hot water quickly enter the brewing area from the heat preservation area, and the hot water is quickly cooled in the brewing area; the design of the two sectorial water-passing holes can increase the flow area, and it is convenient to simultaneously open and close the two sectorial water-passing holes when rotating the rotary upper casing, so that the hot water can smoothly flow from the lower container to the upper container; the water guiding portion is provided with a certain slope to form a certain pressure gradient at the water outlet portion, further enabling the hot water to smoothly flow from the lower container to the upper container, to further solving the problem that the hot water cannot flow smoothly between the upper container and the lower container.

The above description is only a preferred embodiment of the present application, and is not intended to limit the present application in any forms; those skilled in the art can smoothly implement the embodiment as shown in the drawings and described above. The present application is not limited to the technical solutions of the present application, and the equivalent changes of the modification, modification and evolution made by using the technical content disclosed above are all equivalent embodiment of the present application; at the same time, changes, modifications and evolutions of any equivalent variations made to the above embodiments in accordance with the essential technology of the present embodiments are still within the protection scope of the technical solution of the present application.

## Claims

1. A rotary tea bottle, comprising a tea bottle (1) having a lid (11) at the upper end, the tea bottle (1) comprises a bottle body, wherein the tea bottle (1) further comprises a rotary assembly (16) and a second filtration mesh (15),the bottle body comprises an upper container (12) and a lower container (13); the second filtration mesh (15) is fixed to the rotary assembly (16), the rotary assembly (16) comprises a rotary upper assembly and a rotary lower assembly; the rotary upper assembly is fixedly connected to the upper container (12), the rotary upper assembly is rotationally fixed to the rotary lower assembly, the rotary lower assembly is fixedly connected to the lower container (13), the lower surface of the rotary upper assembly is abuts on the upper surface of the rotary lower assembly, and the certain roughness is maintained between the rotary upper assembly and the rotary lower assembly, the rotary upper assembly and the rotary lower assembly are each provided with at least one through hole, the through hole of the rotary upper assembly and the through hole of the rotary lower assembly are correspondingly connected; when the rotary upper assembly is rotated by an angle, the through hole of the rotary upper assembly is misalignment closed with the through hole of the rotary lower assembly.

2. The rotary bottle according to claim 1, wherein the rotary upper assembly comprises a rotary upper casing (161) and a first rotary valve (164), the rotary lower rotary assembly comprises a second rotary valve (165) and a rotary lower casing (166), the second filtration mesh (15) is fixed to the upper surface of the rotary upper casing (161), the upper container (12) is fixedly connected to the rotary upper casing (161), the first rotary valve (164) is fixed to the rotary upper casing (161), the rotary lower casing (166) is fixedly connected to the lower container (13), the second rotary valve (165) is fixed to the rotary lower casing (166), the lower surface of the first rotary valve (164) is abuts on the upper surface of the second rotary valve (165), and the certain roughness is maintained between the first rotary valve (164) and the second rotary valves (165), the rotary upper casing (161) and the rotary lower casing (166) are each provided with a through hole, the first rotary valve (164) and the second rotary valve (165) are each provided with at least one water-passing hole (168), and the through hole and the water-passing hole (168) communicate with each other to form a channel; the upper surface of the rotary lower casing (166) is provided with at least one convex block (170), the lower surface of the rotary upper casing (161) is provided with at least one sliding groove, and the convex block (170) is cooperates with the sliding groove (171); when the rotary upper casing (161) is rotated by an angle, the convex block (170) is abuts on the sliding groove (171), the water-passing hole (168) of the first rotary valve (164) is misalignment closed with the second rotary valve (165).

3. The rotary bottle according to claim 2, wherein the rotary assembly (16) further comprises a rotary shaft (162), the rotary upper casing (161) is fixedly sleeved on the rotary shaft (162), the rotary shaft (162) is provided with through holes, and the upper surface of the first rotary valve (164) is fixed to one end of the rotary shaft (162).

4. The rotary bottle according to claim 2, wherein the number of the water-passing holes (168) in the first rotary valve (164) and the second rotary valve (165) is two, the shape of the water-passing hole (168) is a sector or a triangle.

5. The rotary bottle according to claim 2, wherein a water guiding portion (169) is arranged beside the water-passing hole (168), between the water guiding portion (169) and the horizontal plane forms an angle.

6. The rotary tea bottle according to claim 3, wherein the rotary assembly (16) further comprises a sealing member (163) and a valve fixing seat (167), the lower surface of the second rotary valve (165) is fixed to the upper surface of the valve fixing seat (167), the rotary lower casing (166) is fixed to the valve fixing seat (167), the first rotary valve (164) and the second rotary valve (165) are both located in the through hole of the rotary lower casing (166); the sealing member (163) is provided at the joint of the upper container (12) and the rotary upper casing (161); the sealing member (163) is disposed between the rotary shaft (162) and the rotary upper casing (161); the sealing member (163) is disposed between the rotary shaft (162) and the rotary lower casing (166); the sealing member (163) is disposed between the rotary shaft (162) and the first rotary valve (164); the sealing member (163) is disposed between the rotary upper casing (161) and the rotary lower casing (166); the sealing member (163) is disposed between the valve fixing seat (167) and the second rotary valve (165).

7. The rotary tea bottle according to claim 2, wherein the surface roughness of the lower surface of the rotary upper assembly and the upper surface of the rotary lower assembly ranges from 0.01 µm to 0.06 µm.

8. The rotary tea bottle according to claim 3, wherein the distance between the inner surface of the second filtration mesh (15) and the upper surface of the rotary shaft (162) is 5 mm to 10 mm.

9. The rotary tea bottle according to claim 4, wherein the angle of the sector is 70 to 90 degrees, and the sliding groove (171) is a circular arc sliding groove, the angle corresponding to the central angle of the circular sliding groove is 70 to 90 degrees.

10. The rotary tea bottle according to claim 1, wherein the bottle wall of the upper container (12) is a solid structure, and the bottle wall of the lower container (13) is provided with a heat retaining cavity.

11. The rotary tea bottle according to claim 1, wherein the tea bottle further comprises a first filtration mesh (14), the first filtration mesh(14) is fixed to the upper part of the upper container (12).
